# EUROPEAN PATENT SPECIFICATION

(11) **EP 2 909 747 B1**
(45) Date of publication and mention of the grant of the patent: **27.11.2019**
(21) Application number: 13752721.4
(22) Date of filing: 02.08.2013
(51) Int. Cl.: G06F 16/215, G06F 16/22

(54) **CHARACTERIZING DATA SOURCES IN A DATA STORAGE SYSTEM**
CHARAKTERISIERUNG VON DATENQUELLEN IN EINEM DATENSPEICHERSYSTEM
CARACTÉRISATION DE SOURCES DE DONNÉES DANS UN SYSTÈME DE STOCKAGE DE DONNÉES

(30) Priority: 22.10.2012 US 201261716909 P
(43) Date of publication of application: 26.08.2015
(73) Proprietor: Ab Initio Technology LLC, Lexington, MA 02421 (US)
(72) Inventor: ANDERSON, Arlen, Islip Kidlington OX5 2SG (GB)
(74) Representative: Peterreins Schley
(86) International application number: PCT/US2013/053352
(87) International publication number: WO 2014/065918

(56) References cited:
- WO-A2-2005/029369
- US-A1- 2010 250 563
- US-A1- 2012 197 887

## Description

### BACKGROUND

This description relates to characterizing data sources in a data storage system.

Stored data sets often include data for which various characteristics are not known. For example, ranges of values or typical values for a data set, relationships between different fields within the data set, or dependencies among values in different fields, may be unknown. Data profiling can involve examining a source of a data set in order to determine such characteristics.

Published international application no. WO 2005/029369 A2 discloses a method of processing data includes profiling data from a data source, including reading the data from the data source, computing summary data characterizing the data while reading the data, and storing profile information that is based on the summary data. The data is then processed from the data source. This processing includes accessing the stored profile information and processing the data according to the accessed profile information.

US 2010/0250563 A1 refers to a vertical partitioning method for enhancing the speed of profiling.

### SUMMARY

In one aspect, in general, a method for characterizing data includes the steps as set out in claim 1.

Aspects can include one or more of the following features.

The processing further includes: storing data units corresponding to respective sets of summary data, at least some of the data units including descriptive information describing one or more characteristics associated with the corresponding set of summary data, and generating the system information based on descriptive information aggregated from the stored data units. The processing further includes: applying one or more rules to two or more second sets of summary data, aggregating the second sets of summary data to produce a third set of summary data, and storing the third set of summary data.

The two or more second sets of summary data are derived from two or more data sources of the same record format.

The one or more rules compare values of one or more selected fields between the two or more second sets of summary data.

Each value entry in a list of value entries corresponding to a particular data source further includes a count of the number of records in which the value appears in the selected field.

The location information includes a bit vector representation of the identified respective locations.

The bit vector representation includes a compressed bit vector.

Location information refers to a location where data is no longer stored, with data to which the location information refers being reconstructed based on stored copies. The processing further includes adding one or more fields to the records of at least one of the multiple data sources.

The added fields are populated with data computed from one or more selected fields or fragments of fields in the at least one data source.

The added fields are populated with data computed from one or more selected fields or fragments of fields in the at least one data source and with data from outside of the at least one data source (e.g., from a lookup to enrich the record).

The processing further includes adding the one or more fields to a first set of summary data. In another aspect, in general, a computing system for characterizing data includes: a data storage system and an input device or port configured to receive data of summary data summarizing data stored in different respective data sources in the data storage system; and processing the stored sets of summary data, using at least one processor, to generate system information characterizing data from multiple data sources in the data storage system. The processing includes: storing data units corresponding to respective sets of summary data, at least some of the data units including descriptive information describing one or more characteristics associated with the corresponding set of summary data, and generating the system information based on descriptive information aggregated from the stored data units.

Aspects can include one or more of the following features.

At least a first set of summary data summarizing data stored in a first data source includes, for at least one field of records stored in the first data source, a list of distinct values appearing in the field and respective counts of numbers of records in which each distinct value appears.

Descriptive information describing one or more characteristics associated with the first set of summary data includes issue information describing one or more potential issues associated with the first set of summary data.

The one or more potential issues include presence of duplicate values in a field that is detected as a candidate primary key field.

Descriptive information describing one or more characteristics associated with the first set of summary data includes population information describing a degree of population of the field of the records stored in the first data source.

Descriptive information describing one or more characteristics associated with the first set of summary data includes uniqueness information describing a degree of uniqueness of values appearing in the field of the records stored in the first data source.

Descriptive information describing one or more characteristics associated with the first set of summary data includes pattern information describing one or more repeated patterns characterizing values appearing in the field of the records stored in the first data source.

In another aspect, in general, a computer program, stored on a computer-readable storage medium, for characterizing data, includes instructions for causing a computing system to perform the steps of any one of the methods above.

In another aspect, in general, a computing system for characterizing data includes: a data storage system and an input device or port configured to receive data from the data storage system; and at least one processor configured to perform the steps of any one of the methods above.

Aspects can include one or more of the following advantages.

In some data processing and/or software development environments, one aspect of data quality tracking programs includes profiling the data source(s) within a data storage system to generate a profile, which enables the program to quantify the data quality. The information in the profile and data quality information extracted from the profile enable a user or data analyst to better understand the data. In addition to information within the profile such as counts of unique and distinct values, maximum and minimum values, or lists of common and uncommon values, field-specific validation rules (e.g., "the value in the credit card number field must be a sixteen-digit number") can be asserted prior to profiling, and the profile will include counts of invalid instances for each validation rule on a field-by-field basis. Over the longer term, data quality metrics (e.g., "the fraction of records having an invalid credit card number") can be defined and used to monitor data quality over time as a sequence of data sources, having the same format and provenance, are profiled.

For some programs, data profiling and data quality tracking are fundamentally conceived on a field-by-field, hence source-at-a-time, basis (though allowing for rules involving fields that span pairs of sources). Validation rules in data profiling are applied at the field, or combination of fields, level, and are specified before profiling and serve to categorize field-specific values. Multiple validation rules may be applied to the same field, leading to a richer categorization of values contained in that field of the analyzed records than simply valid or invalid.

Data quality metrics may be applied after profiling, after being defined initially for particular fields in a data source. Values of the data quality metrics may be aggregated to data quality measures over a hierarchy to give a view over a set of related fields. For example, field-specific data quality metrics on the quality and population of "first_name" and "last_name" fields in a Customer dataset can be aggregated to a data quality measure of "customer name," which in turn is combined with a similar aggregate data quality measure of "customer address" to compute a data quality measure of "customer information." The summarization is nevertheless data-specific: the meaning and usefulness of the "customer information" data quality measure stems from its origin in those fields that contain customer data (as opposed to say product data).

In some situations, however, a system-level view of data quality is useful. For example, in a first scenario, a company has a relational database including a thousand tables. A thousand data profiles may contain a large quantity of useful information about each and every table but may not provide a view of the database as a whole without a substantial further investment of time and effort by a data analyst. In particular, the cost of re-profiling full tables as validation rules are incrementally developed may be high, while the delay to construct a full set of validation rules before starting to profile may be long.

In a second scenario, a company is migrating to a new billing system. Their existing billing system includes multiple databases, several containing a thousand tables or more. They know they should profile the data before starting the data migration, but how will they digest all of the profile results in a timely fashion, let alone make use of it? Further they need to ensure the data meets predefined data quality standards before it is fit to migrate. How can they prioritize their effort to cleanse the data?

In a third scenario, a company has multiple replica databases, but those databases have been allowed to be updated and possibly modified independently. No one is sure whether they are still in sync or what the differences might be. They simply want to compare the databases without having to build a body of validation rules-their concern is more with consistency than with validity as such.

The techniques described herein enable data characterization based on application of one or more characterization procedures, including in the bulk data context, which can be performed between data profiling and data quality tracking, both in order of processing and in terms of purpose. In some implementations, the characterization procedures enable data characterization based on profile results for efficient application of validation rules or various data quality metrics, without necessarily requiring multiple data profiling passes of all the data sources within a data storage system.

Other features and advantages of the invention will become apparent from the following description, and from the claims.

### DESCRIPTION OF DRAWINGS

FIG. 1 is a block diagram of a system for characterizing data sources.
FIG. 2 is a schematic diagram of a data characterization procedure.

### DESCRIPTION

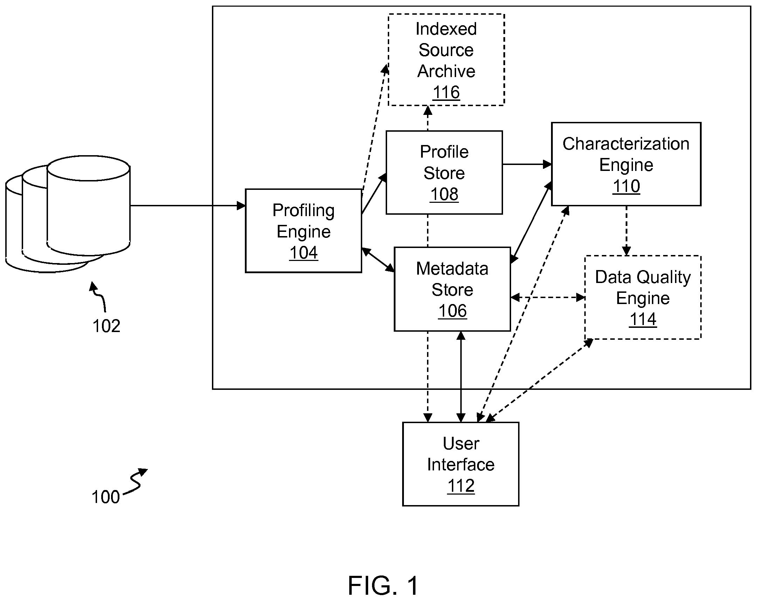

Referring to FIG. 1, a data processing system 100 reads data from one or more data sources 102 (e.g., database tables or other datasets containing collections of records) stored in a data storage system, and profiles them using a profiling engine 104. The data storage system storing the data sources 102 can include any number of database systems or storage media, for example, and may be integrated with the data processing system 100 or coupled via one or more local or online connections. The profiling engine 104 reads record format information, validation rules, and optionally dataset location information, and profile configuration information, from a metadata store 106 to prepare for profiling. Profile results stored in a profile store 108 can include information summarizing any object in the data sources 102 (including a field, record, or dataset). For example, a field-level profile summarizes information about values that appear within a particular field of records of a data source. Optionally, the profile results can also include summary census files, which store census data arranged as a list of value entries for a selected field, with each value entry including a distinct value appearing in the selected field and (optionally) a count of the number of records in which that distinct value appears in the selected field. After profiling, profile results for selected objects are read from the profile store 108 and processed by a characterization engine 110. The characterization engine 110 reads characterization procedures, characterization configuration information, and profile identification information from the metadata store 106 or user interface 112 to prepare for performing one or more selected characterization procedures. User input from the user interface 112 can directly control aspects of the characterization engine 110 including selecting which profiles are to be characterized, which characterization procedures to apply (perhaps grouped by category), and what thresholds to use in particular characterization procedures. User input can also be used to construct new characterization procedures to apply. Optionally, after one or more characterization procedures are applied to one or more profiles, data (e.g., results of a characterization procedure) may be passed through a data quality engine 114 for data quality tracking and monitoring over time.

In some implementations, census files stored in the profile store 108 may contain location information, identifying which particular records within a data source included a given value, and indexed (optionally compressed) copies of (selected) data sources may be archived in an indexed source archive 116. These data source copies serve as snapshots of the data at the moment of profiling in the event that the data source (e.g., a database) is changing over time. The system 100 can retrieve (in principle, the exhaustive set of) records from the indexed source archive 116 corresponding to a data characterization observation (a result of a characterization procedure) by using location information attached to the results of a characterization procedure to support "drill-down" (e.g., in response to a request over the user interface 112). The retrieved records can optionally be transferred to other data processing systems for further processing and/or storage. In some implementations, this location information representation takes the form of a bit vector. If the count of the number of records in which the value appears is not included explicitly in the value entry, it can be computed from the location information.

Data characterization based on one or more characterization procedures can be applied in a data-blind fashion: the particular values in a field and their meaning are ignored in favor of their patterns, counts, and distribution (e.g., the constituents of profiles and census data). For example, for some characterization procedures, it is not important that a field holds the values "equity", "bond" and "derivative," instead of "p," "q," and "r," but it may be important that the field contains three values with a distribution favoring one value. Characterization procedures generally apply to any object within a class of profile (or census) objects, for example, to any field-level profile. This means that the same characterization procedure(s) can be applied to every object of a class of profile objects without prior knowledge of the semantic meaning underlying the object. Part of the characterization procedure itself is able to determine its applicability.

For example, a field-level profile may contain a list of common patterns of values and their associated counts (i.e., a count of the number of records that exhibit a particular pattern), where one example of a pattern is formed from a field value by replacing every alphabetic letter by an "A" and every digit by a "9" while leaving all other characters (e.g., spaces or punctuation) unchanged. A "predominant-pattern" characterization procedure can be configured to determine whether a field is predominantly populated with values having a specific pattern by comparing the fraction of records having the most common (non-blank) pattern to a threshold ("if more than 95% of populated records share a common pattern, then the field is predominantly populated by that pattern"). This characterization procedure can be applied to every field, but only certain fields will meet the condition and result in the data characterization observation "predominantly populated with one pattern". Other examples of patterns can be found in U.S. Application No. 2012/0197887.

Data-specific (semantic) refinements and extensions to characterization procedures are possible and can optionally be applied to enrich results. Such extensions may require evaluation of values in a profile or census data or may refer to special values whose identity has particular semantic significance. The extended characterization procedures may still be applied to all profile objects of their class (or subclass if conditions apply before the characterization procedure is relevant).

Characterization procedures may be layered and/or conditional. Having determined that a field is predominantly populated with one pattern, additional characterization procedures may be applied depending on the nature of the pattern. For example, if the predominant-pattern characterization procedure finds that a field is predominantly populated with 16-digit numbers, this might invoke a secondary (data-specific) characterization procedure to check whether the particular 16-digit values satisfy the Luhn test, which is successful if an algorithm applied to the first 15 digits determines the 16th digit. A sample of values can be provided in a field-level profile in a list of common and uncommon values. A sample may well be sufficient to determine with confidence whether the values in the field are likely to satisfy the Luhn test since the chance of random success is only one in ten, but the full set of distinct values are present in the census data should they be needed in a different situation or to find the exact set of values failing the test.

One purpose of data characterization is to catalog observations to inform a user, perhaps a data analyst or programmer, of what can be inferred from the population structure of a data storage system without foreknowledge of the association between fields and semantic content. The observations do not necessarily imply value judgements of data profiling and data quality monitoring (e.g., "invalid", "low data quality"), but may simply identify characteristics of the data (e.g., "predominantly null", "candidate primary key").

As an example of the separation of fields from semantic content, consider a data characterization that infers a semantic conclusion: the values of a field consisting of 16-digit numbers that satisfy the Luhn test are inferred to be valid credit card numbers. While the characterization procedure to recognize a 16-digit number as a valid credit card number by applying the Luhn test is defined before the characterization procedure begins, the particular fields to which the procedure should be applied are not necessarily specified in advance-these fields can be deduced during the characterization process. This ability to deduce the fields to be characterized distinguishes this type of characterization procedure from most validation rules, even though like validation rules, characterization procedures may ultimately realize a semantic conclusion ("valid credit card number"). In the context of a data storage system that includes a large number of tables in a database, the distinction can be dramatic. It may take subject matter expertise and significant effort to identify from a database schema which fields should hold credit card numbers and to specify that a credit card validation rule is to be applied to each of those identified fields, as may be done for validation rules to be executed during data profiling. In contrast, data characterization applied after data profiling is able to make use of profile results to discover which fields are predominantly populated with 16-digit numbers and subsequently apply the Luhn test to the values in those fields to identify which are likely to contain credit card numbers (e.g., based on the statistics of values satisfying the test). Furthermore, after providing the observation that a field contains credit card numbers, the subset of invalid credit card numbers can be identified and extracted (from the census data).

This credit card number example demonstrates that at least some validation rules can be recast as characterization procedures and applied retroactively without re-profiling the data.

Some data characterization outcomes may be accompanied by potential conclusions that might be drawn from those results (e.g., "this field holds a credit card number" or "this field is a primary key"). Across a system, these conclusions, along with other observations (e.g., "this field is predominantly null"), can be cataloged and presented to users in a prioritized fashion (e.g., along with a rating indicating confidence in the conclusion), according to a variety of hierarchies based on the nature of the potential conclusions and observations. This provides the user community with a variety of entry routes into their data, including a preliminary outline of the content of the data storage system (e.g., key identification, proposed key relations, enumerated domain identification, etc.), indications where subject matter expertise is required to confirm or deny potential conclusions (semantic inferences), and issues that need investigation to determine if they are symptoms of underlying data quality problems (e.g., referential integrity violations, domain or pattern violations, outlier values, etc.).

In a data storage system that stored multiple data sources, it is useful to have one or more roadmaps, even in broad outline, to offer perspective on how to view the system. Data characterizations are able to provide some of the detail to populate such maps and to make them useful. For a relational database, the schema of the database provides one map, but the schema map is greatly enriched when annotated with information gleaned from the data itself. An annotated schema diagram in a user interface populated after data characterization could answer the following questions: How many records are in each entity? What is the cardinality of the relations between entities? If a cardinality of a relation is many-to-one or many-to-many, what is the distribution of cardinality degrees (i.e., the number N in an N-to-1 mapping) and what are examples of each degree?

Alternative perspectives are possible when the schema is re-expressed along lines other than content areas and key relations (e.g., a primary key to foreign key relationship). For example, one alternative is to consider a data storage system that stores multiple datasets of records with values in various fields, with the datasets ordered by size, either by raw record count or by the count of distinct values of the most diverse field (typically the primary key field), with a secondary arrangement to minimize the length of key relation paths between the most populous datasets. This representation emphasizes data concentration. When coupled with visual representations of data characterizations measuring population of fields (e.g., unpopulated or null fields), completeness or comprehensiveness of the data can be seen. Areas where data is less complete can be identified for investigation and possible remediation.

A second alternative might focus on individual fields, listing for each field the set of associated datasets in which that field appears. The system 100 can generate a diagram for display to a user that includes representations of fields, and links between fields are made if they belong to a common dataset. An overall ordering can be imposed by placing the mostly highly reused fields centrally and the least used on the outside regions of the diagram. Here characterization issues can be overlaid on top of this diagram by, for example, associating characterizations with each dataset associated with a field. For example, the list of datasets associated with a field might have a traffic light indicator (with green/yellow/red colors mapped to different characterization states) paired with each dataset to show the characterized state in that dataset-field pair. Correlations of characterization indicators across datasets tied to particular fields would then be easy to spot visually. The choice of characterization procedure displayed could be changed by the user to provide a system-wide view visualization of that procedure's outcome.

Another aspect of data characterization that such a field-centric view would provide would be to show the use of enumerated domain values across a system. Certain fields hold reference data, often encoded, for which some dataset provides a list of the allowed values and their descriptions. Validating consistency of population of fields that have been discovered to be enumerated domains would be possible in a view arranged to show a list of datasets sharing a common field. For example, the datasets could be colored to distinguish which ones hold all of the allowed values of the enumerated domain, which hold a subset of the allowed values, and which contain extra values beyond the allowed values. Sorting by measure of similarity of the lists of encoded values would tidy the display. When trying to convey results associated with large numbers of characterizations, such visualizations are invaluable.

Among the other entry routes to the data sources that data characterization provides, semantic inference is potentially important. As already explained, it is sometimes easier to confirm a list of possible credit card fields than to identify them out of an entire schema, so a starting point, even if not wholly accurate, may be superior to a blank slate. Similarly there are many scenarios in which the identification of particular kinds of data, e.g., personal identifying information like social security numbers, is important, especially in fields containing free text. Characterization procedures can be formulated to identify such information.

### 1 Data profiling

Data profiling of data sources can be performed as part of a data quality tracking program. Individual data sources may be profiled to summarize their contents, including: counting the number of distinct, unique, blank, null or other types of values; comparing the value in each field with its associated metadata to determine consistency with the data type specification (e.g., are there letters in a numeric field?); applying validation rules to one or more fields to confirm, for example, domain, range, pattern, or consistency; comparing fields for functional dependency; comparing fields in one or more datasets for their referential integrity (i.e., how the data would match if the fields were used as the key for a join). The user visible outcome of profiling is, for example, a summary report, or data profile, which also may include lists of common, uncommon or other types of values and patterns of values (e.g., when every letter is replaced by an A and every number by a 9, the result is a pattern showing the positions of letters, numbers, spaces and punctuation in a value). The user interface for viewing a data profile may consist of various tables and charts to convey the above information and may provide the ability to drill down from the report to the original data. A data profile is useful for uncovering missing, inconsistent, invalid, or otherwise problematic data that could impede correct data processing. Identifying and dealing with such issues before starting to develop software is much cheaper and easier than trying to fix the software were the issues to be first encountered after development.

Behind the data profile may lie census files recording the full set of distinct values in every field of the data source and a count of the number of records having those values. In some implementations, location information identifying locations (e.g., storage location in an original data source or a copy of a data source) of the original records have a given value are also captured.

Validation rules may be specified before profiling to detect various data-specific conditions. For example, the value in a field can be compared to an enumerated list of valid values (or known invalid values) or to a reference dataset containing valid (or invalid) values. Ranges for valid or invalid values or patterns for valid or invalid values may also be specified. More complex rules involving multiple fields, thresholds and hierarchies of case-based business logic may also be applied.

Data profile information may be at multiple levels of granularity. For example, there may be profile information associated with each field in a record within the data source, separate profile information associated with each record in the data source, and with the data source as a whole.

Field-level profile information may include a number of counts, including the number of distinct values in the field, the number of unique values (i.e., distinct values that occur once), or the number of null, blank or other types of values. Issue rules can be created to compare different numbers against thresholds, ranges, or each other during processing of profiles to detect and record various conditions. Or, if the number of distinct values is greater than the number of unique values, ("number of distinct values > number of unique values"), there must be "duplicates in the field." When summarized to the system level, the number of instances of each issue can be counted.

Multi-field or record-level profile information may include counts associated with validation rules involving multiple fields, including correlated patterns of population (e.g., a pair of fields are either both populated or both unpopulated), correlated values and/or patterns (e.g., if the country cd is "US," then the zipcode field must be populated with a five-digit number), or counts indicating uniqueness of a specified combination of multiple fields ("compound keys").

Data pattern code fields can be added to a record before profiling to support characterization procedures associated with correlated population of fields. Data pattern codes are values assigned to encode the presence of values in one or more classes for one or more fields or fragments of fields. For example, a population pattern code might be constructed for the string fields in a record using the following classification: each string field is assigned a value of "0" if it is null (not present), "1" if it is populated (present and not empty or blank), and "2" if it is empty (present but contains no data: the empty string) and "3" if it is blank (present and consists of one or more space characters). The value for a record is the concatenation of these values for the ordered set of string fields appearing in the record, e.g. "11230" for a five-string field record would indicate the first and second string fields are populated, the third is empty, the fourth is blank and the last is null. Another pattern code might represent as a bitmap the collection of settings of indicator fields which only take one of two values (e.g., 0 or 1, "Y" or "N", "M" or "F"). Combining different value classes is possible when constructing a data pattern code. Data pattern codes enable many record-level validation rules to be formulated about correlations between multiple fields in records without returning to the original data source.

Data source-level profile information may include the number of records, volume, and time of profile run. When processed to the system level, this gives the distributions of numbers of records and volumes of the data sources stored in the data storage system. Across time, growth rates for number of records and/or volume can be determined both for individual sources and collectively. For data migration, knowing the fraction of, and which, tables in a database are unpopulated and what the size distribution is among the other tables is helpful for planning the migration. For capacity planning, metrics on number of records and volume being added to the database are important.

Data profiling is sometimes viewed as essentially source-at-time. There is one profile for each data source, with occasional overlaps between data sources to analyze referential integrity and functional dependency with a second data source.

A challenge behind this type of profiling is that for large data sources and/or numerous data sources it can take a long time to compute the census files and data profiles. There may also be no a priori knowledge of what validation rules are interesting or appropriate to apply. Or, for numerous sources, it may take a long time to formulate and apply validation rules to the collection of sources before profiling begins. A data profile of a data source may be first taken without validation rules. The data profile is analyzed, candidate validation rules are formulated, and a second profile is produced. Over time, profiles are rerun as validation rules are accumulated and refined.

### 2 Characterization procedures

Characterization procedures can be applied to existing data profiles and their associated census files. This allows the potentially expensive step of generating a full profile to be executed only once, for a given collection of data sources. This is also able to avoid the delay of formulating a complete set of validation rules before starting to profile. A range of pre-defined characterization procedures, applicable to any field-level profile, can be applied initially to the results of the full profile. Further data-specific characterization procedures, some similar to validation rules, can be developed incrementally without incurring either the cost of taking more than one full profile or the delay of formulating a complete set of validation rules before starting to profile (before any profile results are available). Full data profiles may be generated again on demand when data sources change, and characterization procedures may be applied to the resulting data profiles.

A "system" in the following examples is considered to include two or more data sources. Each data source is profiled as described above, together or separately, and perhaps in multiple ways, for example, separating functional dependency and referential integrity analysis from characterization of data. This leads to a collection of two or more data profiles and their associated census files. The characterization engine 110 processes a selection of the data profiles. In particular, characterization procedures are applied to one or more profiles to produce summaries enriched with observations. In addition, the characterization procedure observations may be both aggregated and subjected to additional characterization procedures to produce system-level summaries. Systems may be grouped in a possibly overlapping fashion to form larger systems, and the result is a collection of summaries for different combinations of data sources and systems.

Several examples (exemplary not exhaustive) follow of the kinds of analyses that can be made when applying characterization procedures to a data profile. First consider analysis of a single profile which focuses on the issues of field and record population. An issue "field predominantly null" might be detected and recorded if the fraction of records which contain null values for a field is larger than a threshold (e.g., "number of null values/number of records > 0.95"). Or, "field predominantly unpopulated" might be marked if the number of blank, empty or null fields is larger than a threshold (e.g., "number of blank + number of empty + number of null > 0.95"). Similarly a user might modify an adjustable threshold, set by default to 0.3, to detect "field notably unpopulated."

A field in which one or more values are disproportionately represented may be interesting. In some implementations, this might be detected as follows. If the count of records associated with a value is more than one standard deviation above the mean count of records associated with any value, then the characterization engine 110 may report "field predominantly populated" and provide a list of the predominant values. This can be computed by estimating the mean and standard deviation from the set of common values and their counts. It may also be useful to report both the predominant value of all values and the predominant value, excluding particular values, for example, blank or null values (or user-declared "sentinel" values). As an example, suppose the list of common values contains three values having counts 10, 1, and 1. The mean count is (10+1+1)/3 = 4. The standard deviation is sqrt((36 + 9 +9)/3) ∼ 4.2. Thus 10 > 4+4.2 implies that the value with the highest count is predominantly populated. This procedure does not require knowledge of the values.

A data-specific variant of this procedure would involve a specific data value: Suppose the three field values are "A", "P" and "Z," and it is notable if the fraction of "A" records is greater than 50%. A characterization procedure might be formulated as follows, 'for a field containing three values "A", "P" and "Z", it is notable if the fraction of "A" records is greater than 50%.' The characterization procedure would first identify which fields had a distinct value count of 3, then, of those which have the common values "A", "P," and "Z," and finally whether the fraction of "A" is greater than 50%. On first impression, this might seem contrived, but in fact it is efficient when applied in bulk to all fields in a system because the field(s) for which the procedure is relevant will be quickly discovered and the appropriate test applied without requiring specialist knowledge of the data model.

Some of the above procedures use one or more counts, value lists, or functions of counts and lists present in the profile output to detect a population issue about a field and to record it. In some implementations, a subsequent summarization of a set of profiles performed by the characterization engine 110 will count the number of observations of each kind and may record a link to each dataset/field/profile triple in which that observation occurs. (A triple is used because multiple profiles may be made of a given dataset/field pair, particularly over time.) This link can be stored to support "drill-down" in a final summary profile report to each underlying dataset/field/profile where the observation was made. Further drilldown within the identified profile to see specific records manifesting the issue should then be possible using the indexed source archive 116.

Sometimes it is useful to enrich a dataset before profiling to allow more detailed analysis to be made from the profile. For example, data pattern codes for population as described above could be added to the data by the system 100 before profiling. The state of population of each field, populated or not, can be combined into a code for the record. This enables correlated population patterns across multiple fields to be detected in the analysis of the profile. For example, two fields may always either both be populated or neither be populated. This can be determined from the collection of population pattern codes by checking the fraction of records having pairwise correlation between each pair of fields - that is, one can compute the fraction of records having logical equality of their state of population by taking the "exclusive-nor": 1 if both fields are populated or both unpopulated, 0 otherwise. This kind of generic computation is blind to the contents of the fields, hence it can be applied in a bulk-processing context.

Data-specific pattern codes also lead to useful characterization procedures. For example, suppose the original record contains three fields of interest "first", "middle", "last" for a customer name. A simple pattern code might be the concatenation of the letter "F" if the first name field is populated, "M" if the middle name is populated and "L" if the last name is populated. If any field is unpopulated, the corresponding letter is not contained in the code. Thus a "FM" code would represent a record containing a first and a middle but not a last name. In a profile, the number of counts of each code will come out in a list of common values (and more generally will be present in the census files underlying the profile in which the count of every distinct value is recorded). A user could then determine how many records had both a first and middle name but no last name from the count associated with "FM". This quantity cannot be determined from the count of populated records in the first name field and the count of populated records in the middle name field that are present in a profile of the dataset without the population pattern code.

It may be that the absence of a last name when the first and middle names are populated is an indicator of the occurrence of a particular error in an upstream system. By monitoring the count of records having this condition, a company can monitor the frequency of occurrence of this error and validate the effectiveness of efforts to address the problem.

Problems indicated by correlated population of two or more fields are often subtle to diagnose so having a means to identify correlated records in a profile is useful. It may be the case that the association of a correlation among fields to the occurrence of a problem is not known at the outset. Such an association could be deduced by correlating lists of records known to have a particular error with lists of records associated with different population pattern codes. Once an association is identified, historical profiles can be used to determine the frequency in which the error occurred in the past - before it was known what to look for. This can be enabled by the system 100 building sufficiently rich population codes to be able to identify such correlations retrospectively. The intent of including data pattern codes and associated record location information is partly to facilitate this kind of retrospective analysis.

After considering the mere state of population of a field, a possible next step is to focus on the pattern of characters in the field. If each letter is replaced, say, by "A" and each number by "9," leaving punctuation and spaces untouched, a pattern is formed from the characters constituting a field value. Often the first fact to establish is whether predominantly all of the entries in a field satisfy the same pattern. This itself is a notable feature to be detected and recorded as it distinguishes fields of fixed format from those containing less constrained text. Many field values, like dates, credit card numbers, social security numbers and account numbers, have characteristic patterns. For example, a date typically consists of eight numbers in a variety of possible formats, e.g. 99/99/9999, 9999-99-99, or simply 99999999. Recognizing one of these characteristic patterns, a list of common values in the profile can be passed to a function for validation as a date - which might check that, consistently across the values in the list, the same two the digits are between 1 and 12, two more are between 1 and 31, and that the remaining four digits are in the range 1910-2020 (perhaps narrower or broader depending on circumstance). A credit card number is a sixteen-digit field whose last digit is a check digit which can be validated by the Luhn test to confirm it is a valid credit card number.

If a field has a predominant but not universal pattern, the exceptions are often interesting. This can be detected and recorded. If location information for example records associated with each pattern are recorded in the profile, they can be retrieved in a drilldown from the summary report.

Examination of the patterns in a field also allow validation of the contents of a field against the field's data type specification. This validation can be independently recorded in a profile, but more detailed analysis can sometimes be made from the profile. In particular, it is notable, for example, if there are letters in an ostensibly numeric field. Sometimes an account number will be specified as say NUMERIC(10), but the profile shows that the first two characters of the account number are in fact letters instead of digits. If this is the predominant pattern, then the inference can be drawn that the account number in fact begins with two letters, and it is the type specification which is wrong. This would be the conclusion that would be recorded after analyzing the profile when preparing a profile of profiles.

After considering the pattern of data in each field, attention can be drawn to the set of values in the field. A first consideration is the number of distinct values in a field. Fields having a relatively small number of distinct values (either in absolute number or relative to the number of records) often contain reference data, drawn from a limited set of enumerated values. Such fields are distinct from fields where the number of distinct values are comparable to the number of records. These are typically either keys (which uniquely identify a record) or facts (specific data items, like transaction amounts, which are randomly different on every record). Also keys are reused in other datasets for the purpose of linking data whereas facts are not. Cross-join analysis between datasets can confirm a key relation originally proposed based on relative uniqueness of field values and overlapping ranges.

A third set of interesting values are those where the cardinality of distinct values is neither comparable to the number of records nor very much smaller. These values may be foreign keys or may be fact data. Comparison with data in other profiles may be necessary to decide.

Consider the set of fields which have a relatively small number of distinct values. Datasets in which the number of records equals the (small) number of distinct values are candidate reference datasets containing a complete set of enumerated values. Identification of candidate reference datasets and fields is notable and may be recorded in the summary profile. Such a reference dataset will often have at least two fields with the same number of distinct values: one is a code that will be reused in other datasets and the other is a description. These can be distinguished in two ways. First the description typically is more free-format (there will be irregular patterns across the set of records) than the code. Second, the code will be reused in other datasets.

In one implementation, reuse of the field values of one field in one dataset in other fields of other datasets can be determined in the following way. Take the collection of field-level profiles. Find the sub-collection of field-level profiles corresponding to candidate reference datasets by finding those field-level profiles where the number of distinct values is less than a threshold (e.g. 150) and the number of distinct values equals the number of unique values. Next the set of distinct values in each candidate reference dataset-field are compared with the set of distinct values in each of the remaining field-level profiles to find those which have substantial overlap. The agreement needn't be perfect because there might be data quality issues: indeed detecting disagreement in the presence of substantial overlap is one purpose of the comparison. Substantial overlap might be defined as: the fraction of populated records having one or more values in the candidate reference dataset-field is greater than a threshold. This allows unpopulated records in the source dataset without contaminating the association and it allows a (small) number of invalid values (i.e. values not present in the candidate reference dataset-field).

This characterization procedure is useful during a discovery phase when an association between fields in different datasets is unknown and must be discovered. In a later phase of operation when such associations are known and declared, the characterization procedure may be altered to detect when the threshold fraction of unmatched values is exceeded. For example, a new value may have been added to a dataset (e.g. when a new data source is added upstream) but has not (yet) been added to the reference dataset. This is an important change to identify. Comparing the sets of distinct values in fields expected to share the same set of values is therefore an important test that can be applied to the dataset-field profiles on an ongoing basis.

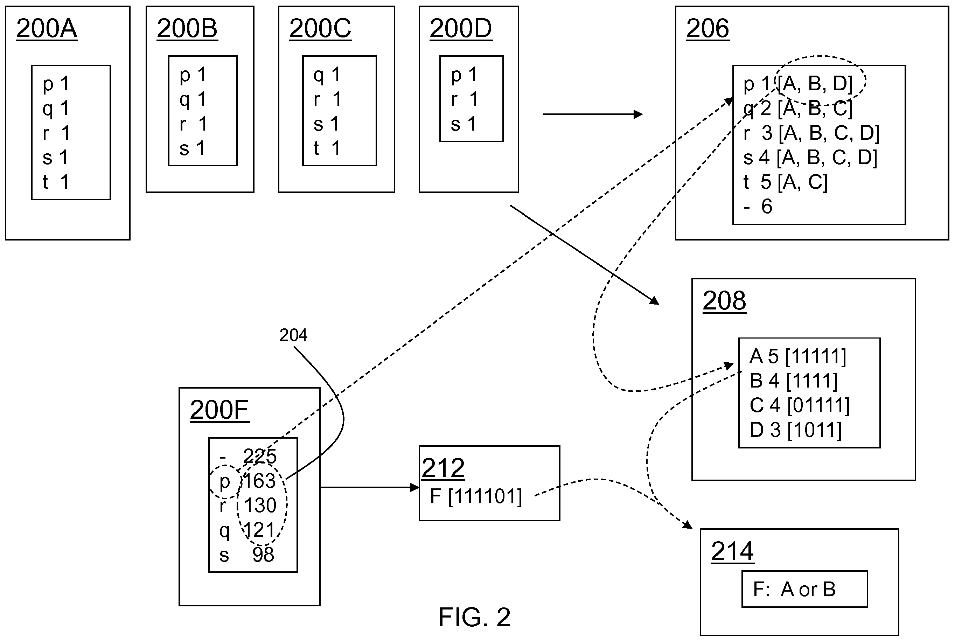

There are a variety of ways in which the sets of distinct values in two or more field-level profiles can be compared. Because the naive implementation is an all-to-all pairwise comparison, most of which have no chance of success, approaches to reduce the number of comparisons are important, particularly when facing large numbers of field-level profiles as one would have in a database with a thousand tables. FIG. 2 illustrates one implementation of a characterization procedure performed by the characterization engine 110. A first step is to organize the set of profiles 200A, 200B, 200C, 200D for candidate reference dataset-fields of datasets A, B, C, D in descending order by the count N of distinct values. Next for each remaining dataset-field profile, called non-reference dataset-field profiles, for example profile 200F for dataset F, the characterization engine 110 finds the minimum number of distinct values required to meet the substantial overlap test. This can be done by taking the total of populated field values and successively removing the least common field until the fraction of populated records remaining drops below the substantial overlap threshold. The minimum number of reference values is the number of remaining field values plus one. In profile 200F, the last value "s" is dropped, and for values 204, the fraction of populated records excluding "s" is (163 + 130 + 121)/(163 + 130 + 121 + 98) = 414/512 is found to be less than the substantial overlap threshold of 0.95. This means that 3 + 1 =4 values are required in the reference dataset to meet the substantial overlap criterion with the value counts in profile 200F. Any dataset containing fewer than 4 values cannot satisfy the substantial overlap test with profile 200F because any set of three or fewer values chosen from profile 200F would span a smaller fraction of the F-records than 95%, which has been proven by finding the fraction spanned by the three most common values. This eliminates from consideration those reference datasets having too few values for there to be any chance of a substantial overlap. In this case, the reference dataset-field of dataset D of profile 200D is eliminated.

A next step is to compare the most frequent value of the non-reference dataset-field with each reference dataset-field to determine in which reference dataset-fields it does not occur. If the ratio of populated records not including the most common value to all populated records is below the substantial overlap threshold, then any dataset-field not containing the most common value can be excluded since it will fail to meet the substantial overlap threshold. In the example, the most common value in 200F is "p". The fraction of populated records not including the value "p" is (130+121+98)/(163+130+121+98) = 349/512 < 0.95, which is below the substantial overlap threshold. This means that any other dataset-field that does contain a "p" can be excluded. (More than one value may need to be excluded until the fraction of records with no match is large enough that the substantial overlap threshold cannot be met.)

One way to make this comparison is for the characterization engine 110 to construct a lookup data structure 206 (e.g., a lookup table) whose entries consist of each of the reference dataset-field values and a vector of location information indicating in which datasets (or dataset profile) that value occurs. A field labelling the entry may be added for convenience. In the example lookup data structure 206, the entry "p 1 [A,B,D]" indicates that the value "p" from the profile 200F occurs in the profiles 200A, 200B and 200D (1 is the value of the field labelling the entry). The lookup data structure 206 may also be held in normalized form with each entry identifying one dataset profile in which the value occurs. Here, looking up the "p" value in the lookup data structure 206 finds the associated reference datasets "[A, B, D]" of which D has already been eliminated as having too few reference values. The effect of this lookup is to eliminate C, which has a sufficient number of values but does not contain the most common value "p".

Finally given a set of pairs of reference dataset-fields and non-reference dataset-fields for which the condition of substantial overlap can potentially be met, a direct comparison of the sets of distinct values can be made. In one implementation, this direct comparison can be done by forming a vector intersection of the sets of distinct values, determining the fraction of records in the remaining dataset-field which match and comparing to the substantial overlap threshold. In a second implementation, a bit vector may be formed from the set of distinct values in both the reference dataset-field profile and in the non-reference dataset-field profiles (by assigning a bit to each distinct value from the totality of distinct values across the candidate reference dataset-fields and candidate non-reference dataset-fields - NB if the same value is present in more than one reference dataset-field it need only have one bit assigned to it). The assignment of reference values to bits is shown by the first two columns of the lookup data structure 206. The resulting bit vectors for each reference dataset are collected in system information 208. A bit vector indicating which reference values are populated in profile 200F is given by bit vector 212. The fifth bit is 0 indicating that the reference value "t" is not present in the dataset-field profiled in profile 200F. A simple logical AND of the bit vector in profile 200F bit vector 212 and each bit vector in the A and B entries of system information 208 gives the collection of distinct values held in common. The fraction of records in the remaining dataset-field can then be computed and compared to the substantial overlap threshold. The result 214 is found that both dataset-fields of profiles 200A and 200B are possible reference dataset-fields for the non-reference dataset-field of profile 200F.

In some implementations, an additional feature may reduce computation time. It may well be after the lookup on the most common value to the lookup data structure 206, some non-reference dataset-field profiles are candidate matches to more than one reference dataset-field as in FIG. 2. Once a match has been found to pair a non-reference dataset-field with a first reference dataset-field, that non-reference dataset-field need only be considered as a candidate for those other reference dataset-fields which are sufficiently similar to the matching reference dataset-field.

Additional processing and/or pre-processing is used to identify similar reference dataset-fields. The detection of such a similarity may be independently of interest from this computational optimization. The key observation is that not all reference datasets having the same number of values actually share the same values. The collection of reference dataset-field profiles may be compared amongst each other to find how many shared values each have. The substantial overlap test has already determined the minimum number of distinct values that must be shared with the non-reference dataset-field. Suppose a reference dataset-field A with profile 200A has been found to be a match to the non-reference dataset-field F with profile 200F, that is, they share enough values to meet the substantial overlap test with profile 200F. Suppose there were an additional reference dataset-field E with profile 200E consisting of four values "p", "q", "r" and "w." This reference dataset-field has four values, so it has enough values to meet the substantial overlap test with profile 200F described above. But dataset-field E only shares three values in common with dataset-field A, which is known to match non-reference dataset-field F (to within substantial overlap). This indicates that in fact dataset-field E can at most share three values with non-reference dataset-field F hence will fail the substantial overlap test. Knowing the number of shared values between candidate reference dataset-fields allows some candidate reference dataset-fields to be rejected as candidates because they will surely have too few shared values with the non-reference dataset-field. Each candidate reference dataset-field that has a sufficient number of shared values with a known matching reference dataset-field is evaluated as above. Some of the new pairings of candidate reference-dataset field and non-reference dataset-field may meet the condition of substantial overlap while others may not. If more than one meet the condition, they can all be reported as candidate matches as further knowledge may be required to disambiguate the pairing.

Certain sets of distinct field values, notably 0,1 or Y, N, are used in a variety of different dataset-fields with different meaning. They are not strictly reference values because their meaning is clear in context (usually from the fieldname), and no reference dataset is needed to define their meaning. They are however important to detect in a discovery phase and to monitor in later phases of operation. If a dataset-field of very low cardinality (say less than 3 or 4) has no matching reference dataset-field, it may be labelled as an indicator field and reported as such. In later processing, especially over time, it may be important to monitor changes in the fraction of records having each value. If a dataset-field of higher but still low cardinality has no matching reference dataset-field, this could be reported as well as a "low-cardinality field having no associated reference data."

A second approach to comparing dataset-field value lists will yield different but equally important conclusions. The set of dataset-fields having the same or similar fieldnames can be compared to determine whether their field contents are similar. This will determine whether fields sharing the same (or similar) names in fact contain the same kind of data. In some legacy systems, particularly on mainframes where storage space was at a premium, some fields have been overloaded, and different data is stored in them than is indicated by the fieldname (e.g. in the COBOL copybook). In other systems, due to the vagaries of design and evolution of systems, common terms have been used as fieldnames for more than one field holding distinct kinds of data. In a discovery mode, where an unfamiliar system is being analyzed through its data profiles, it is important to uncover discrepancies of this kind because the naive user presumes that if the fieldnames are the same, the fields necessarily hold similar data.

The process of comparison is much the same as above with the exception that rather than driving the choice of comparisons finding dataset-fields with similar numbers of distinct values, candidate pairs are found because they have the same or similar fieldnames. Fuzzy matching based on edit distance can be used to compare fieldnames, but a second form of similarity is also relevant. This is to identify two fields as similar if the same sequence of characters occurs in each in the same order (possibly up to some number of unmatched characters in both fieldnames). This helps to identify fields where one fieldname is a substring of the other, e.g. Country and OriginCountry. This occurs particularly often for reference dataset-fields because a value from a particular reference dataset-field may be used in multiple fields in the same record in another dataset and often each field will differ by modifiers to the reference fieldname.

This form of similarity also identifies candidate pairs where fieldnames have been changed by dropping characters, e.g. EquityFundsMarket and EqFdsMkt. Both of these kinds of variations are observed in practice with the former being the more common. Sometimes the latter is combined with the former, in which case greater tolerance must be allowed. For example, one might require the matching characters in one fieldname must occur in the same order in the other but additional characters are ignored. Then, country_cd and orgn_cntry are matches. Naturally this will admit more matches and hence may require more comparisons.

Providing user-visibility of the match combinations and control over which matches are to be passed for further assessment (including the ability to add further pairings) is clearly valuable.

In one implementation, after identifying a collection of candidate pairings of dataset-fields based on fieldname, for relatively low cardinalities of distinct values, the pairs can be compared as in the reference dataset-field case using the substantial overlap criterion, lookups of most frequent values to identify candidates where matching is possible, and ultimately direct comparison of the distinct value sets. For higher cardinality sets, a join-analysis or referential integrity assessment may be required. In some implementations, this involves comparing census files consisting of dataset-field-value and value-count for each dataset to find how many matching values are present in each dataset. The result of this analysis is to identify dataset-fields where the overlap of values is strong and the fieldnames agree - if the overlap is not strong or is absent, this is noteworthy because it may indicate a field has been overloaded. Of course, just because two fields have strong overlap does not necessarily imply they are the same quantity. This is particularly true of surrogate key fields, which may accidentally overlap because both are sets of keys that have been generated sequentially (or quasi-sequentially). In any event, in the case where field names agree, the working presumption is that dataset-fields with overlapping value sets are related.

One of the other checks that can be made when comparing sets of values is to look for values which are outside the maximum and minimum values of the dataset have the largest number of unique values (or distinct values of low cardinality). This can indicate outlier values.

A different collection of comparisons are relevant in the data monitoring scenario in which the same logical dataset(s) is repeatedly profiled over time. In this scenario, the data quality issues of immediate concern are ones of data consistency over time. General rules may be formulated to compute baseline average values, rate of change of the average value, magnitude of fluctuation around the mean curve, and other statistical measures. This may be applied both to counts of the number of records of particular kinds (populated, null, etc) and to the values themselves. Among the questions that can be answered are, is the data volume growing? Is the growth monotonic or cyclical? What about frequency of data quality issues (each of the above classes of issue-population, patterns, enumerated values-can be analyzed in this way). Such rules may also be applied to data pattern codes, perhaps measuring changes in the number of data patterns arising over time (greater pattern variation is often expected with increasing data volume) or changes in correlations between fields indicated by the pattern code.

The techniques described above can be implemented using a computing system executing suitable software. For example, the software may include procedures in one or more computer programs that execute on one or more programmed or programmable computing system (which may be of various architectures such as distributed, client/server, or grid) each including at least one processor, at least one data storage system (including volatile and/or non-volatile memory and/or storage elements), at least one user interface (for receiving input using at least one input device or port, and for providing output using at least one output device or port). The software may include one or more modules of a larger program, for example, that provides services related to the design, configuration, and execution of dataflow graphs. The modules of the program (e.g., elements of a dataflow graph) can be implemented as data structures or other organized data conforming to a data model stored in a data repository.

The software may be provided on a tangible, non-transitory medium, such as a CD-ROM or other computer-readable medium (e.g., readable by a general or special purpose computing system or device), or delivered (e.g., encoded in a propagated signal) over a communication medium of a network to a tangible, non-transitory medium of a computing system where it is executed. Some or all of the processing may be performed on a special purpose computer, or using special-purpose hardware, such as coprocessors or field-programmable gate arrays (FPGAs) or dedicated, application-specific integrated circuits (ASICs). The processing may be implemented in a distributed manner in which different parts of the computation specified by the software are performed by different computing elements. Each such computer program is preferably stored on or downloaded to a computer-readable storage medium (e.g., solid state memory or media, or magnetic or optical media) of a storage device accessible by a general or special purpose programmable computer, for configuring and operating the computer when the storage device medium is read by the computer to perform the processing described herein. The inventive system may also be considered to be implemented as a tangible, non-transitory medium, configured with a computer program, where the medium so configured causes a computer to operate in a specific and predefined manner to perform one or more of the processing steps described herein.

A number of embodiments of the invention have been described. Nevertheless, it is to be understood that the foregoing description is intended to illustrate and not to limit the scope of the invention, which is defined by the scope of the following claims. Accordingly, other embodiments are also within the scope of the following claims. For example, various modifications may be made without departing from the scope of the invention. Additionally, some of the steps described above may be order independent, and thus can be performed in an order different from that described.

## Claims

1. A method for processing data to efficiently generate system information characterizing the data stored in a data storage system, the method including:
reading data from an interface to the data storage system (102), and storing two or more sets of summary data (200A-200F) summarizing data stored in different respective data sources in the data storage system (102); and
processing the stored sets of summary data (200A-200F), using at least one processor, to generate system information (214) characterizing data from multiple data sources in the data storage system (102), wherein a stored set of summary data (200A-200F) summarizing data stored in a particular data source includes, for at least one selected field of records in the particular data source, a corresponding list of value entries, with each value entry including a value appearing in the selected field and wherein each value entry in the list of value entries corresponding to the particular data source further includes location information identifying respective locations within the particular data source of records in which the value appears in the selected field, the processing including:
analyzing the stored sets of summary data (200A-200F) to select two or more data sources that store data satisfying predetermined criteria, and
generating the system information including information identifying a potential relationship between fields of records included in different data sources based at least in part on comparison between distinct values from a stored set of summary data (200A-200F) summarizing a first of the selected data sources and distinct values from a stored set of summary data (200A-200F) summarizing a second of the selected data sources.

2. The method of claim 1, wherein the processing further includes:
storing data units corresponding to respective sets of summary data (200A-200F), at least some of the data units including descriptive information describing one or more characteristics associated with the corresponding set of summary data (200A-200F), and
generating the system information based on descriptive information aggregated from the stored data units.

3. The method of claim 1, wherein the processing further includes:
applying one or more rules to two or more second sets of summary data,
aggregating the second sets of summary data to produce a third set of summary data, and
storing the third set of summary data.

4. The method of claim 3, the one or more rules compare distinct values of one or more selected fields between the two or more second sets of summary data.

5. The method of claim 1, wherein each value entry in a list of value entries corresponding to a particular data source further includes a count of the number of records in which the value appears in the selected field.

6. The method of claim 1, wherein the location information includes a bit vector representation of the identified respective locations, optionally wherein the bit vector representation includes a compressed bit vector.

7. The method of claim 1, wherein the location information refers to a location where data is no longer stored, with data to which the location information refers being reconstructed based on stored copies.

8. The method of claim 1, wherein the processing further includes adding one or more fields to the records of at least one of the multiple data sources.

9. The method of claim 8, wherein the added fields are populated with data computed from one or more selected fields or fragments of fields in the at least one data source.

10. The method of claim 8, wherein the added fields are populated with data computed from one or more selected fields or fragments of fields in the at least one data source and with data from outside of the at least one data source.

11. The method of claim 8, wherein the processing further includes adding the one or more fields to a first set of summary data.

12. The method of claim 1, wherein:
the analyzing includes analyzing the stored sets of summary data to select at least portions of one or more selected fields, or one or more selected records, in at least one of the data sources that store data satisfying predetermined criteria; and
the generating includes generating the system information including information identifying observations about at least one of the selected portions based at least in part on distinct values from a stored set of summary data.

13. The method of claim 1, wherein the location information identifies a data storage location in an original data source or a copy of a data source, indicating in which datasets, or dataset profile, that the value occurs.

14. A computer program, stored on a computer-readable storage medium, for characterizing data, the computer program including instructions for causing a computing system to perform the steps of any one of methods 1 to 13.

15. A computing system for characterizing data, the computing system including:
- an interface coupled to a data storage system configured to read data, and store two or more sets of summary data summarizing data stored in different respective data sources in the data storage system; and
- at least one processor configured to perform the steps of any one of methods 1 to 13.

## Patentansprüche

1. Verfahren zum Verarbeiten von Daten, um Systeminformationen, die die Daten, die in einem Datenspeichersystem gespeichert sind, charakterisieren, effizient zu erzeugen, wobei das Verfahren Folgendes umfasst:
Lesen von Daten von einer Schnittstelle zum Datenspeichersystem (102) und Speichern von zwei oder mehr Sätzen von Zusammenfassungsdaten (200A-200F), die Daten zusammenfassen, die in verschiedenen jeweiligen Datenquellen im Datenspeichersystem (102) gespeichert sind; und
Verarbeiten der gespeicherten Sätze von Zusammenfassungsdaten (200A-200F) unter Verwendung mindestens eines Prozessors, um Systeminformationen (214) zu erzeugen, die Daten aus mehreren Datenquellen im Datenspeichersystem (102) charakterisieren, wobei ein gespeicherter Satz von Zusammenfassungsdaten (200A-200F), der Daten, die in einer bestimmten Datenquelle gespeichert sind, zusammenfasst, für mindestens ein gewähltes Feld von Datensätzen in der bestimmten Datenquelle eine entsprechende Liste von Werteinträgen enthält, wobei jeder Werteintrag einen Wert enthält, der im gewählten Feld erscheint, und jeder Werteintrag in der Liste von Werteinträgen, der der bestimmten Datenquelle entspricht, ferner Ortsinformationen enthält, die jeweilige Orte in der bestimmten Datenquelle von Datensätzen identifizieren, an denen der Wert im gewählten Feld erscheint, wobei die Verarbeitung Folgendes umfasst:
Analysieren der gespeicherten Sätze von Zusammenfassungsdaten (200A-200F), um zwei oder mehr Datenquellen zu wählen, die Daten speichern, die vorgegebene Kriterien erfüllen, und
Erzeugen der Systeminformationen, die Informationen enthalten, die eine mögliche Beziehung zwischen Feldern von Datensätzen, die in verschiedenen Datenquellen enthalten sind, identifizieren, mindestens teilweise auf der Grundlage eines Vergleichs zwischen bestimmten Werten aus einem gespeicherten Satz von Zusammenfassungsdaten (200A-200F), die eine erste der gewählten Datenquellen zusammenfassen, und bestimmten Werten aus einem gespeicherten Satz von Zusammenfassungsdaten (200A-200F), die eine zweite der gewählten Datenquellen zusammenfassen.

2. Verfahren nach Anspruch 1, wobei die Verarbeitung ferner Folgendes enthält:
Speichern von Dateneinheiten, die entsprechenden Sätzen von Zusammenfassungsdaten (200A-200F) entsprechen, wobei mindestens einige der Dateneinheiten beschreibende Informationen enthalten, die eine oder mehrere Eigenschaften, die dem entsprechenden Satz von Zusammenfassungsdaten (200A-200F) zugeordnet sind, beschreiben, und
Erzeugen der Systeminformationen auf der Grundlage beschreibender Informationen, die aus den gespeicherten Dateneinheiten zusammengefasst wurden.

3. Verfahren nach Anspruch 1, wobei die Verarbeitung ferner Folgendes enthält:
Anwenden einer oder mehrerer Regeln auf zwei oder mehr zweite Sätze von Zusammenfassungsdaten,
Zusammenfassen der zweiten Sätze von Zusammenfassungsdaten, um einen dritten Satz von Zusammenfassungsdaten zu erstellen, und
Speichern des dritten Satzes von Zusammenfassungsdaten.

4. Verfahren nach Anspruch 3, wobei die eine oder die mehreren Regeln bestimmte Werte eines oder mehrerer gewählter Felder zwischen den zwei oder mehr zweiten Sätzen von Zusammenfassungsdaten vergleichen.

5. Verfahren nach Anspruch 1, wobei jeder Werteintrag in einer Liste von Werteinträgen, die einer bestimmten Datenquelle entsprechen, ferner eine Zählung der Anzahl von Datensätzen, in denen der Wert im gewählten Feld erscheint, enthält.

6. Verfahren nach Anspruch 1, wobei die Ortsinformationen eine Bitvektorrepräsentation der identifizierten entsprechenden Orte enthalten und wahlweise die Bitvektorrepräsentation einen komprimierten Bitvektor enthält.

7. Verfahren nach Anspruch 1, wobei sich die Ortsinformationen auf einen Ort beziehen, an dem die Daten nicht mehr gespeichert sind, wobei Daten, auf die sich die Ortsinformationen beziehen, auf der Grundlage gespeicherter Kopien rekonstruiert werden.

8. Verfahren nach Anspruch 1, wobei das Verarbeiten ferner ein Hinzufügen eines oder mehrerer Felder zu den Datensätzen von mindestens einer der mehreren Datenquellen enthält.

9. Verfahren nach Anspruch 8, wobei die hinzugefügten Felder mit Daten belegt werden, die aus einem oder mehreren gewählten Feldern oder Fragmenten von Feldern in der mindestens einen Datenquelle berechnet werden.

10. Verfahren nach Anspruch 8, wobei die hinzugefügten Felder mit Daten belegt werden, die aus einem oder mehreren gewählten Feldern oder Fragmenten von Feldern in der mindestens einen Datenquelle und mit Daten von außerhalb der mindestens einen Datenquelle belegt werden.

11. Verfahren nach Anspruch 8, wobei das Verarbeiten ferner ein Hinzufügen des einen oder der mehreren Felder zu einem ersten Satz von Zusammenfassungsdaten enthält.

12. Verfahren nach Anspruch 1, wobei
das Analysieren ein Analysieren der gespeicherten Sätze von Zusammenfassungsdaten enthält, um mindestens Teile eines oder mehrerer gewählter Felder oder einen oder mehrere gewählte Datensätze in mindestens einer der Datenquellen, die Daten speichern, die vorgegebene Kriterien erfüllen, zu wählen; und
das Erzeugen ein Erzeugen der Systeminformationen enthält, die Informationen enthalten, die Beobachtungen über mindestens einen der gewählten Abschnitte mindestens teilweise auf der Grundlage bestimmter Werte aus einem gespeicherten Satz von Zusammenfassungsdaten identifizieren.

13. Verfahren nach Anspruch 1, wobei die Ortsinformationen einen Datenspeicherort in einer ursprünglichen Datenquelle oder einer Kopie einer Datenquelle identifizieren, der angibt, in welchen Datensätzen oder in welchem Datensatzprofil der Wert auftritt.

14. Computerprogramm, das in einem computerlesbaren Speichermedium gespeichert ist, zum Charakterisieren von Daten, wobei das Computerprogramm Anweisungen enthält, um zu bewirken, dass ein Rechensystem die Schritte eines der Verfahren 1 bis 13 durchführt.

15. Rechensystem zum Charakterisieren von Daten, wobei das Rechensystem Folgendes enthält:
- eine Schnittstelle, die an ein Datenspeichersystem gekoppelt ist, das konfiguriert ist, Daten zu lesen und zwei oder mehr Sätze von Zusammenfassungsdaten zu speichern, die Daten zusammenfassen, die in verschiedenen entsprechenden Datenquellen im Datenspeichersystem gespeichert sind; und
- mindestens einen Prozessor, der konfiguriert ist, die Schritte nach einem der Verfahren 1 bis 13 durchzuführen.

## Revendications

1. Procédé de traitement de données pour générer efficacement des informations de système caractérisant les données stockées dans un système de stockage de données, le procédé comportant :
la lecture de données depuis une interface vers le système de stockage de données (102), et le stockage de deux ou plusieurs ensembles de données sommaires (200A-200F) résumant des données stockées dans différentes sources de données respectives dans le système de stockage de données (102) ; et
le traitement des ensembles stockés de données sommaires (200A-200F), à l'aide d'au moins un processeur, pour générer des informations de système (214) caractérisant des données provenant de multiples sources de données dans le système de stockage de données (102), dans lequel un ensemble stocké de données sommaires (200A-200F) résumant des données stockées dans une source de données particulière comporte, pour au moins un champ sélectionné d'enregistrements dans la source de données particulière, une liste correspondante d'entrées de valeurs, chaque entrée de valeur comportant une valeur apparaissant dans le champ sélectionné et dans lequel chaque entrée de valeur dans la liste d'entrées de valeurs correspondant à la source de données particulière comporte des informations d'emplacement identifiant des emplacements respectifs dans la source de données particulière d'enregistrements dans lesquels la valeur apparaît dans le champ sélectionné, le traitement comportant :
l'analyse des ensembles stockés de données sommaires (200A-200F) pour sélectionner deux ou plusieurs sources de données qui stockent des données satisfaisant des critères prédéterminés, et
la génération des informations de système comportant des informations identifiant une relation potentielle entre des champs d'enregistrements inclus dans différentes sources de données en fonction au moins en partie d'une comparaison entre des valeurs distinctes provenant d'un ensemble stocké de données sommaires (200A-200F) résumant une première des sources de données sélectionnées et des valeurs distinctes provenant d'un ensemble stocké de données sommaires (200A-200F) résumant une seconde des sources de données sélectionnées.

2. Procédé selon la revendication 1, dans lequel le traitement comporte en outre
le stockage d'unités de données correspondant à des ensembles respectifs de données sommaires(200A-200F), au moins certaines des unités de données comportant des informations descriptives décrivant une ou plusieurs caractéristiques associées à l'ensemble correspondant de données sommaires (200A-200F), et
la génération des informations de système en fonction d'informations descriptives agrégées à partir des unités de données stockées.

3. Procédé selon la revendication 1, dans lequel le traitement comporte en outre
l'application d'une ou de plusieurs règles à deux ou plusieurs deuxièmes ensembles de données sommaires,
l'agrégation des deuxièmes ensembles de données sommaires pour produire un troisième ensemble de données sommaires, et
le stockage du troisième ensemble de données sommaires.

4. Procédé selon la revendication 3, les une ou plusieurs règles comparant des valeurs distinctes d'un ou de plusieurs champs sélectionnés entre les deux ou plusieurs deuxièmes ensembles de données sommaires.

5. Procédé selon la revendication 1, dans lequel chaque entrée de valeur dans une liste d'entrées de valeurs correspondant à une source de données particulière comporte en outre un compte du nombre d'enregistrements dans lesquels la valeur apparaît dans le champ sélectionné.

6. Procédé selon la revendication 1, dans lequel les informations d'emplacement comportent une représentation vectorielle binaire des emplacements respectifs identifiés, facultativement dans lequel la représentation vectorielle binaire comporte un vecteur binaire compressé.

7. Procédé selon la revendication 1, dans lequel les informations d'emplacement se réfèrent à un emplacement où des données ne sont plus stockées, les données auxquelles se réfèrent les informations d'emplacement étant reconstruites en fonction de copies stockées.

8. Procédé selon la revendication 1, dans lequel le traitement comporte en outre l'ajout d'un de plusieurs champs aux enregistrements d'au moins une des multiples sources de données.

9. Procédé selon la revendication 8, dans lequel les champs ajoutés sont peuplés de données calculées provenant d'un ou de plusieurs champs ou fragments de champs sélectionnés dans l'au moins une source de données.

10. Procédé selon la revendication 8, dans lequel les champs ajoutés sont peuplés de données calculées provenant d'un ou de plusieurs champs ou fragments de champs sélectionnés dans l'au moins une source de données et de données provenant de l'extérieur de l'au moins une sources de données.

11. Procédé selon la revendication 8, dans lequel le traitement comporte en outre l'ajout des un ou plusieurs champs à un premier ensemble de données sommaires.

12. Procédé selon la revendication 1, dans lequel
l'analyse comporte l'analyse des ensembles stockés de données sommaires pour sélectionner au moins des parties d'un ou de plusieurs champs sélectionnés, ou d'un ou plusieurs enregistrements sélectionnés, dans au moins une des sources de données qui stockent des données satisfaisant des critères prédéterminés ; et
la génération comporte la génération des informations de système comportant des informations identifiant des observations relatives à au moins une des parties sélectionnées en fonction au moins en partie de valeurs distinctes provenant d'un ensemble stocké de données sommaires.

13. Procédé selon la revendication 1, dans lequel les données d'emplacement identifient un emplacement de stockage de données dans une source de données d'origine ou une copie d'une source de données, indiquant dans quels ensembles de données, ou profil d'ensembles de données, se produit la valeur.

14. Programme informatique, stocké sur un support de stockage lisible par ordinateur, pour caractériser des données, le programme informatique comportant des instructions pour amener un système informatique à réaliser les étapes selon l'un quelconque des procédés 1 à 13.

15. Système informatique de caractérisation de données, le système informatique comportant :
- une interface couplée à un système de stockage de données configurée pour lire des données, et stocker deux ou plusieurs ensembles de données sommaires résumant des données stockées dans différentes sources de données respectives dans le système de stockage de données ; et
- au moins un processeur configuré pour réaliser les étapes selon l'un quelconque des procédés 1 à 13.
